# EUROPÄISCHE PATENTANMELDUNG

(11) **EP 0 546 625 A1**
(43) Veröffentlichungstag der Anmeldung: **16.06.1993**
(21) Anmeldenummer: 92203775.9
(22) Anmeldetag: 04.12.1992
(51) Int. Cl.: H04M 1/31

(54) **Vorrichtung zur Übertragung von Wählimpulsen**

(30) Priorität: 12.12.1991 DE 4140904
(71) Anmelder: Philips Patentverwaltung GmbH, 22335 Hamburg (DE); Philips Electronics N.V., 5621 BA Eindhoven (NL)
(72) Erfinder: Reichelt, Ingo, Dipl.-Ing., W-2000 Hamburg 1 (DE)
(74) Vertreter: Volmer, Georg, Dipl.-Ing.

(57) **Zusammenfassung**

Die Erfindung bezieht sich auf eine Übertragungsvorrichtung mit einer Steuervorrichtung (11), die wenigstens zur Zuführung von Wählimpulsen und zur Steuerung von zwei zwischen zwei Anschlußleitungen (1,2) angeordneten Schaltvorrichtungen (3, 10) vorgesehen ist. Des weiteren enthält die Übertragungsvorrichtung einen mit einer Schaltvorrichtung (3) gekoppelten Entkoppelkondensator (4). Um Verzerrungen des von einer Anschlußleitung (1,2) gelieferten Stromes beim Einschalten zu verhindern, ist die erste Schaltvorrichtung (3) einerseits mit einer Anschlußleitung (1) und andererseits mit der zweiten Schaltvorrichtung und dem Entkoppelkondensator (4) gekoppelt. Hierbei ist der nicht mit der ersten Schaltvorrichtung (3) gekoppelte Anschluß der zweiten Schaltvorrichtung (10) mit der zweiten Anschlußleitung (2) gekoppelt.

## Beschreibung

Die Erfindung bezieht sich auf eine Übertragungsvorrichtung mit einer Steuervorrichtung, die wenigstens zur Zuführung von Wählimpulsen und zur Steuerung von wenigstens einer ersten und zweiten zwischen einer ersten und zweiten Anschlußleitung angeordneten Schaltvorrichtung vorgesehen ist, und mit einem mit den Schaltvorrichtungen gekoppelten Entkoppelkondensator.

Aus der EP-A2-0 371 558 ist eine solche Übertragungsvorrichtung bekannt, bei der parallel zur Übertragungsrichtung zwischen zwei Anschlußleitungen eine serienschaltung aus zwei Schaltvorrichtungen liegt. An eine Anschlußleitung ist noch ein Entkoppelkondensator zur Abblockung von Gleichstrom angeschlossen. An den anderen Anschluß des Entkoppelkondensators ist ein Transformator gelegt, an dessen Primäranschlüssen beispielsweise ein Endgerät bestehend aus einer Gabelschaltung, einem Verstärker und einem Telefon angeschlossen ist. Die sekundärseitigen Anschlüsse des Transformators sind über die Übertragungsvorrichtung mit einer Vermittlungsstelle gekoppelt.

Die steuervorrichtung, die aus einem Optokoppler besteht, liefert Schleifenschluß- und Wählimpulse an die Schaltvorrichtungen. Die erste Schaltvorrichtung enthält einen MOS-Feldeffekttransistor und die zweite Schaltvorrichtung einen Bipolartransistor. Der Bipolartransistor ist mit einem Spannungsteiler und einem Speicherkondensator gekoppelt. Der Verbindungspunkt der beiden Widerstände des Spannungsteilers ist mit einem Anschluß des Speicherkondensators und der Basis des Bipolartransistors verbunden. Der dem Verbindungspunkt abgewandte Anschluß eines Widerstandes des Spannungsteilers ist an die Steuereinrichtung angeschlossen. Der Kollektor des Bipolartransistors ist mit einer Anschlußleitung und dessen Emitter mit dem Drain-Anschluß des MOS-Feldeffekttransistors der ersten Schaltvorrichtung verbunden. Mit dem Gate-Anschluß dieses MOS-Feldeffekttransistors ist ein weiterer mit der Steuereinrichtung verbundener Spannungsteiler und mit dem Source-Anschluß eine Anschlußleitung gekoppelt.

Bei einem Schleifenschluß- oder Wählimpuls werden der MOS-Feldeffekttransistor und der Bipolartransistor nach einer Aufladezeit des Speicherkondensators gleichstrommäßig durchlässig. Hierdurch wird zwischen den beiden Anschlußleitungen eine Schleife gebildet.

Im gesperrten Zustand der Transistoren der beiden Schaltvorrichtungen wird in der Regel von der Vermittlungsstelle noch ein gewisser Restgleichstrom geliefert, der zur Aufladung des Entkoppelkondensators führt. Beim Ausschalten, wenn also ein Schleifenschluß- oder Wählimpuls beendet ist, gehen die Transistoren in einen gesperrten Zustand. Der Entkoppelkondensator lädt sich dann auf, wodurch sich Verzerrungen im von der Vermittlungsstelle gelieferten Strom ergeben. Die Vermittlungsstelle kann hierdurch das Ende eines Impulses nur ungenau detektieren.

Der Erfindung liegt daher die Aufgabe zugrunde, eine Übertragunsvorrichtung zu schaffen, die eine Verzerrung des von der Vermittlungsstelle fließenden Stromes verhindert.

Diese Aufgabe wird bei einer Übertragungsvorrichtung der eingangs genannten Art dadurch gelöst, daß die erste Schaltvorrichtung einerseits mit der ersten Anschlußleitung und andererseits mit der zweiten Schaltvorrichtung und dem Entkoppelkondensator gekoppelt ist und daS der nicht mit der ersten Schaltvorrichtung gekoppelte Anschluß der zweiten Schaltvorrichtung mit der zweiten Anschlußleitung gekoppelt ist.

Die erste Schaltvorrichtung ist bei der Erfindung so in die Übertragungsvorrichtung eingebracht, daß im abgeschalteten Zustand der Schaltvorrichtungen kein Restgleichstrom zum Entkoppelkondensator von der Vermittlungsstelle fließen kann. Dadurch kann sich der Entkoppelkondensator nicht nach dem Ausschalten der Vermittlungsstelle aufladen und keine Verzerrung des von der Vermittlungsstelle gelieferten Stromes verusachen.

Eine einfache Realisierung einer Schaltvorrichtung ergibt sich, wenn die beiden Schaltvorrichtungen als Transistoren ausgebildet sind. Die jeweiligen Transistoren der beiden Schaltvorrichtungen werden während des Auftretens von Wählimpulsen leitend geschaltet werden. Hierbei ist vorgesehen, daß der Steueranschluß der ersten Schaltvorrichtung mit einem Ausgang der Steuervorrichtung und der Steueranschluß der zweiten Schaltvorrichtung mit dem Koppelpunkt zwischen erster Schaltvorrichtung und Entkoppelkondensator gekoppelt ist. Bei einem Schleifenschluß- oder Wählimpuls schaltet die Steuereinrichtung über einen Steueranschluß den Transistor der ersten Schaltvorrichtung leitend. Wenn die erste Schaltvorrichtung leitend geworden ist, fließt über sie ein Strom, der vom Steueranschluß des Transistors der zweiten Schaltvorrichtung beispielsweise über einen Widerstand fließt. Dadurch wird auch dieser Transistor leitend geschaltet. Diese Ausführungsform hat den Vorteil, daß sie eine geringere Impedanz aufweist.

Eine weitere einfache Realisierung einer Schaltvorrichtung ergibt sich, wenn die beiden Schaltvorrichtungen als Transistoren ausgebildet sind, deren jeweiliger Steueranschluß mit einem Ausgang der Steuervorrichtung gekoppelt ist.

Wenn die Steuereinrichtung, die beispielsweise aus einem Optokoppler bestehen kann, einen Wählimpuls erhält, schaltet sie die jeweiligen Transistoren der beiden Schaltvorrichtungen in den leitenden Zustand. Über diese beiden Transistoren kann dann der von der Vermittlungsstelle gelieferte Gleichstrom fließen. Der Entkoppelkondensator blockt den von der Vermittlungsstelle gelieferten Gleichstrom ab. Ein Wechselstrom kann zwischen der Vermittlungsstelle und beispielsweise einem Endgerät über den Entkoppelkondensator und den Transformator fließen. Als Transistor der zweiten Schaltvorrichtung kann ein Bipolartransistor vorgesehen werden, dessen Kollektor mit dem gemeinsamen Anschluß von Entkoppelkondensator und erster Schaltvorrichtung, dessen Emitter mit der zweiten Anschlußleitung und dessen als Steueranschluß dienende Basis mit der Steuervorrichtung gekoppelt ist. Bei dieser Ausführungsform wird der Bipolartransistor über den Basisanschluß direkt von der Steuereinrichtung gesteuert.

Bei einer anderen Ausführungsform, bei welcher der Transistor der zweiten Schaltvorrichtung ein Bipolartransistor ist, wird dieser Transistor über den Transistor der ersten Schaltvorrichtung gesteuert. Hierbei ist vorgesehen, daß der Kollektor des Bipolartransistors und dessen als Steueranschluß dienende Basis mit dem gemeinsamen Anschluß von Entkoppelkondensator und erster Schaltvorrichtung und dessen Emitter mit der zweiten Anschlußleitung gekoppelt ist. Der Bipolartransistor wird erst dann leitend geschaltet, wenn der Transistor der ersten Schaltvorrichtung leitend ist und ein Strom über den Transistor der ersten Schaltvorrichtung zur Basis des Bipolartransistors geflossen ist.

Als Transistor für die erste Schaltvorrichtung ist ein MOS-Feldeffekttransistor vorgesehen, dessen Source-Anschluß mit der ersten Anschlußleitung, dessen Drain-Anschluß mit dem Entkoppelkondensator und dessen als Steueranschluß dienender Gate-Anschluß mit der Steuervorrichtung gekoppelt ist. Für die erste Schaltvorrichtung wird ein MOS-Feldeffekttransistor gewählt, weil dessen gleichstrommäßiger Durchlaßwiderstand sehr niederohmig ist.

In einer Weiterbildung der Erfindung ist vorgesehen, daß mit der Basis des Bipolartransistors der ersten Schaltvorrichtung ein Speicherkondensator gekoppelt ist. Der Speicherkondensator gewährleistet eine hohe Wechselstromimpedanz der Übertragungsvorrichtung im eingeschwungenen Zustand.

Durch den Speicherkondensator wird der Bipolartransistor im Einschaltmoment zu Beginn eines Schleifenschluß- oder Wählimpulses verzögernd leitend. Hierdurch kann die Vermittlungsstelle häufig nicht rechtzeitig genug feststellen, daß das der Übertragungsvorrichtung zugeordnete Endgerät im Belegtzustand ist. Damit die Vermittlungsstelle einen Belegtzustand erkennen kann, ist vorgesehen, daß der Emitter des Bipolartransistors der zweiten Schaltvorrichtung mit der Basis eines als Bipolartransistors ausgebildeten ersten Schalttransistors gekoppelt ist, dessen Kollektor mit dem Speicherkondensator und dessen Emitter mit der zweiten Anschlußleitung gekoppelt ist. Durch den ersten Schalttransistor wird der Speicherkondensator nach dem Einschalten nicht sofort aufgeladen. Erst wenn ein bestimmter Schwellenstrom an der Basis des ersten Schalttransistors erreicht ist, wird der erste Schalttransistor leitend und damit wird der Speicherkondensator aufgeladen. Durch dieses verzögerte Einschalten des Speicherkondensators fließt durch den Bipolartransistors der zweiten Schaltvorrichtung ein genügend hoher Strom, so daß die Vermittlungsstelle den Belegtzustand erkennen kann.

Hierbei ist die Impedanz der Übertragungsvorrichtung zuerst gering, da der Speicherkondensator abgeschaltet ist. Wenn sich der Speicherkondensator auflädt steigt die Impedanz der Übertragungsvorrichtung.

Nach dem Einschalten ergibt sich ein zur Vermittlungsstelle fließender Gleichstrom, der sich auf einen stationären Wert einschwingt. Um die Einschwingzeit zu verkürzen, sind folgende Maßnahmen vorgesehen:
Der Emitter des Bipolartransistors der ersten Schaltvorrichtung ist mit der Basis eines als Bipolartransistors ausgebildeten ersten Schalttransistors gekoppelt, dessen Emitter mit der zweiten Anschlußleitung und dessen Kollektor mit einem Gate-Anschlluß eines als MOS-Feldeffekttransistors ausgebildeten zweiten Schalttransistors gekoppelt ist. Der Drain-Anschluß des zweiten Schalttransistors ist mit der ersten Anschlußleitung und der Source-Anschluß des zweiten Schalttransistors mit der Basis des Bipolartransistors des ersten Schalttransistors gekoppelt. Durch diese Maßnahmen wird der Speicherkondensator über den zweiten Schalttransistor zusätzlich aufgeladen, wodurch sich eine Verkürzung der Einschwingzeit ergibt.

Nach dem Einschalten weist die Übertragungsvorrichtung durch das sofortige Durchschalten des Bipolartransistors der zweiten Schaltvorrichtung eine geringe Impedanz auf. Damit die Impedanz der Übertragungsvorrichtung nicht sofort wieder größer wird, ist zwischen Basis und Emitter des als Bipolartransistors ausgebildeten ersten Schalttransistors ein Kondensator eingefügt. Dieser bewirkt bis zu seinem Aufladen und einem Durchschalten des ersten Schalttransistors, daß die Übertragungsvorrichtung von der Vermittlungsstelle die Impedanz nach dem Einschaltvorgang aufweist.

In einer Fortbildung der Erfindung ist vorgesehen, daß der Bipolartransistor der zweiten Schaltvorrichtung ein Niederspannungstyp ist. Niederspannungstypen haben eine höhere Stromverstärkung als Hochspannungstypen. Ein Hochspannungstyp ist aufgrund der erforderlichen Spannungsfestigkeit beim Ausschalten in der oben genannten EP-A2-0 371 558 erforderlich. Um die gewünschte hohe Stromverstärkung und damit eine hohe Impedanz der Übertragungsvorrichtung im Betriebsfall zu erreichen, ist beim Stand der Technik (EP-A2-0 371 558) ein Darlingten-Transistor eingefügt. Bei der erfindungsgemäßen Übertragungsvorrichtung ist ein Hochspannungstyp nicht erforderlich, so daß der Bipolartransistor eine hohe Stromverstärkung und die Übertragungsvorrichtung eine hohe Impedanz aufweist. Somit übt die Übertragungsvorrichtung einen geringen Einfluß auf die von dem Endgerät stammenden Signale aus.

Verwendet werden kann die Übertragungsvorrichtung in einem Übertragungssystem zur Übertragung von Signalen zwischen einer Vermittlungsstelle und einem Endgerät. Die Übertragungsvorrichtung liefert die Wählimpulse des Endgerätes zur Vermittlungsstelle und überträgt Wechselsignale zwischen dem Endgerät und der Vermittlungsstelle. Ein Endgerät besteht beispielsweise aus einer Gabelschaltung, einem Verstärker und einem Telefon.

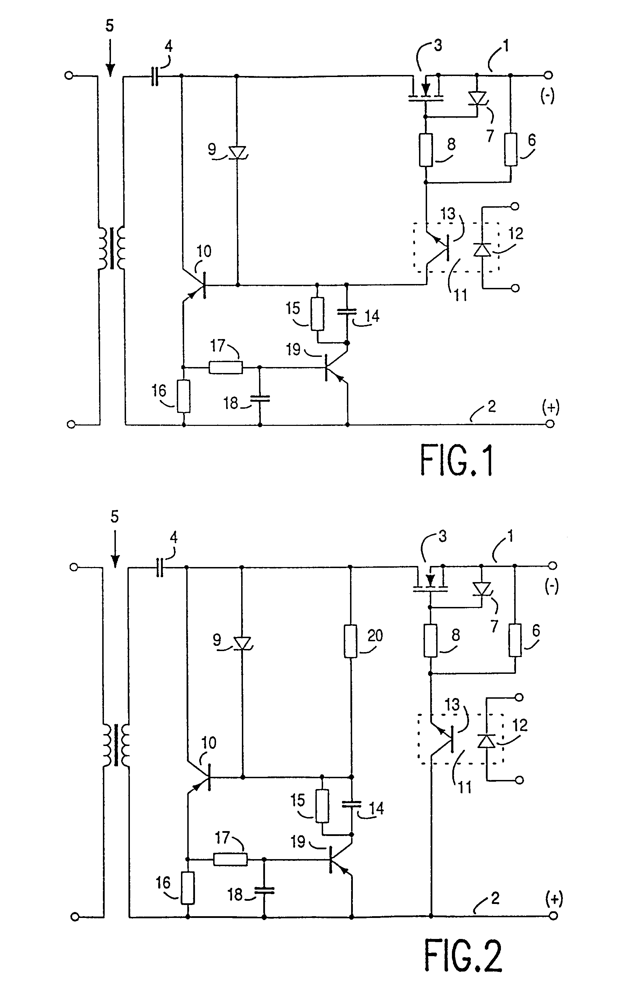

Drei Ausführungsbeispiele einer Übertragungsvorrichtung und ein Übertragungssystem werden nachstehend anhand der Figuren 1 bis 4 näher erläutert.

Die in der Fig. 1 dargestellte Übertragungsvorrichtung ist über zwei Anschlußleitungen 1 und 2 mit einer Vermittlungsstelle einer Telekommunikationsanlage gekoppelt. Über einen N-Kanal-MOS-Feldeffekttransistor 3 und einen Entkoppelkondensator 4 ist die Anschlußleitung 1 mit einem Anschluß einer Sekundärseite eines Transformators 5 verbunden. Der andere sekundärseitige Anschluß des Transformators 5 ist an die Anschlußleitung 2 gelegt. Primärseitig ist der Transformator 5 beispielsweise mit einem Endgerät verbunden, das eine Gabelschaltung, einen Verstärker und ein Telefon oder auch ein Modem enthält. Der MOS-Feldeffekttransistor 3 ist Bestandteil einer ersten Schaltvorrichtung. Der Source-Anschluß des Transistors 3 ist mit der Anschlußleitung 1, einem Widerstand 6 und mit einer Anode einer Zenerdiode 7 verbunden. Der Gate-Anschluß bildet einen gemeinsamen Knoten mit der Kathode der Zenerdiode 7 und einem Widerstand 8. Der Drain-Anschluß des Transistors 3 ist an den Entkoppelkondensator 4, an die Anode einer weiteren Zenerdiode 9 und an den Kollektor eines PNP-Bipolartransistors 10 angeschlossen, der Bestandteil einer zweiten Schaltvorrichtung ist.

Der andere Anschluß des Widerstandes 6 und der andere Anschluß des Widerstandes 8 sind mit einem Ausgang einer Steuervorrichtung 11 verbunden, die eingangsseitig mit einem Schleifenschluß-und Wählimpulsgeber gekoppelt ist. Die Steuervorrichtung 11 ist ein aus einer Leuchtdiode 12 und einem Fototransistor 13 bestehender Optokoppler. Die Leuchtdiode 12 ist mit dem Schleifenschluß-und Wählimpulsgeber verbunden. Der Emitter des Fototransistors 13 ist mit dem Widerstand 6 und dem Widerstand 8 verbunden. Der Kollektor des Fototransistors 13 weist eine Verbindung zu einem Speicherkondensator 14, einem Widerstand 15, der Kathode der Zenerdiode 9 und der Basis des Transistors 10 auf.

Mit dem Emitter des Transistors 10 sind noch zwei Widerstände 16 und 17 verbunden. Der andere Anschluß des Widerstandes 16 ist an die Anschlußleitung 2 und der andere Anschluß des Widerstandes 17 an einen Kondensator 18 und die Basis eines ersten Schalttransistors 19 (PNP-Bipolartransistor) gelegt. Der Kollektor des ersten Schalttransistors 19 ist mit den anderen Anschlüssen des Speicherkondensators 14 und des Widerstandes 15 verbunden. Der Emitter und der andere Anschluß des Kondensators 18 sind an die Anschlußleitung 2 gelegt.

Ein vom Schleifenschluß- und Wählimpulsgeber erzeugter und der Leuchtdiode 12 zugeführter Impuls macht den Fototransistor 13 leitend, der daraufhin den MOS-Feldeffekttransistor 3 der ersten Schaltvorrichtung leitend schaltet. Ebenso wird der Bipolartransistor 10 gleichstrommäßig leitend geschaltet. Daher kann ein Gleichstrom von der Vermittlungsstelle über die Anschlußleitung 1 und die beiden Transistoren 3 und 10 zur Anschlußleitung 2 fließen. Beim Ausschalten, d.h., wenn der Impuls beendet ist, werden die Transistoren 3 und 10 stromlos und der Entkoppelkondensator 4 von der Anschlußleitung 1 abgetrennt. Hierdurch kann der Entkoppelkondensator 4 keine Verzerrungen im von der Vermittlungsstelle gelieferten Strom erzeugen, da er nicht von einem Gleichstrom der Vermittlungsstelle aufgeladen wird.

Zur Erläuterung der Funktionsweise des Schaltungsteiles aus den Widerständen 15, 16 und 17, dem Speicherkondensator 14, dem Kondensator 18, dem ersten Schalttransistor 19 und dem Transistor 10 wird zuerst vorausgesetzt, daß der Kondensator 18 nicht in der Schaltung vorhanden ist. Wenn ein bestimmter Schwellenstrom durch den Widerstand 16 fließt, wird der erste Schalttransistor leitend und ein gemeinsamer Anschluß von Speicherkondensator 14 und Widerstand 15 liegen am Potential der Anschlußleitung 2. Der Speicherkondensator 14 wird aufgeladen und die Schaltung geht in einen stationären Zustand.

Nach der Zuführung des Impulses wird nach Überschreiten eines Schwellenstromes, der durch den Widerstand 16 fließt, der Schalttransistor 19 eingeschaltet. Dadurch liegt das Potential der Anschlußleitung 2 am Speicherkondensator 14. Der Speicherkondensator 14 wird dann auf einen stationären Wert aufgeladen. Durch dieses Schaltungsteil ist die Übertragungsvorrichtung im Einschaltmoment niederohmig, da Speicherkondensator 14 und Widerstand 15 abgeschaltet sind. Die Vermittlungsstelle kann aufgrund der Niederohmigkeit im Einschaltmoment einen Belegtzustand eines mit dem Transformator gekoppelten Endgerätes sicher detektieren.

Durch den Kondensator 18 wird erreicht, daß der durch den Widerstand 16 fließende Strom eine längere Zeit auf dem Einschaltpegel bleibt und somit einen niederohmigen Zustand der Übertragungsvorrichtung über einen längeren Zeitraum ermöglicht. Nachdem der Kondensator 18 aufgeladen ist, wird der erste Schalttransistor 19 leitend und die Kombination aus Widerstand 15 und Speicherkondensator 14 wird hinzugeschaltet.

Der Speicherkondensator 14 gewährleistet eine hohe Wechselstromimpedanz der Übertragungsvorrichtung im eingeschwungenen Zustand.

Der Bipolartransistor 10 sollte vom Niederspannungstyp sein, wodurch eine hohe Stromverstärkung ermöglicht wird. Bei einer hohen Stromverstärkung kann der Widerstand 8 hochohmiger gewählt werden. Durch den höheren Widerstandswert des Widerstandes 8 weist die Übertragungsvorrichtung eine höhere Impedanz auf und kann somit die Signale, welche von dem Endgerät über den Transformator geliefert werden, weniger beeinflussen. Die beiden Zenerdioden 7 und 9 haben eine Schutzfunktion (Spannungsbegrenzung). Zusätzlich wird über die Zenerdiode 9 während des Einschwingvorganges ein Strom zur Aufladung des Kondensators 14 geliefert, so daß hierdurch eine Beschleunigung des Aufladevorganges bewirkt wird.

In der Fig. 2 ist ein weiteres Ausführungsbeispiel einer Übertragungsvorrichtung dargestellt. Dieses Ausführungsbeispiel der Fig. 2 unterscheidet sich vom Ausführungsbeispiel der Fig. 1 dadurch, daß der Kollektor des Fototransistors 13 nicht mit einem Anschluß des Speicherkondensators 14 verbunden ist, sondern mit der Anschlußleitung 2, und daß parallel zur Zenerdiode 9 ein weiterer Widerstand 20 dazugeschaltet ist. Die restliche Schaltung ist mit der Schaltung der Fig. 1 identisch. Gesteuert wird der Transistor 10 von der Steuervorrichtung 11, indem der Transistor 3 bei einem Impuls leitend wird und dadurch über den Widerstand 20 und die Zenerdiode 9 ein Strom zur Basis des Transistors 10 fließt. Beim Einschalten ist die Impedanz dieses Ausführungsbeispiel der Fig. 2 geringer als die Impedanz des Ausführungsbeispiels nach der Fig. 1. Bei dem Ausführungsbeispiel der Fig. 1 wird die Impedanz der Übertragungsvorrichtung durch die Widerstände 6 und 16, durch die Transistoren 3 und 10 und durch den Transistor 13 der Steuervorrichtung 11 bestimmt. Bei dem Ausführungsbeispiel der Fig. 2 wird die Impedanz der Schaltungsanordnung nach dem Einschalten durch die beiden Transistoren 3 und 10 und durch die Widerstände 6 und 16 bestimmt.

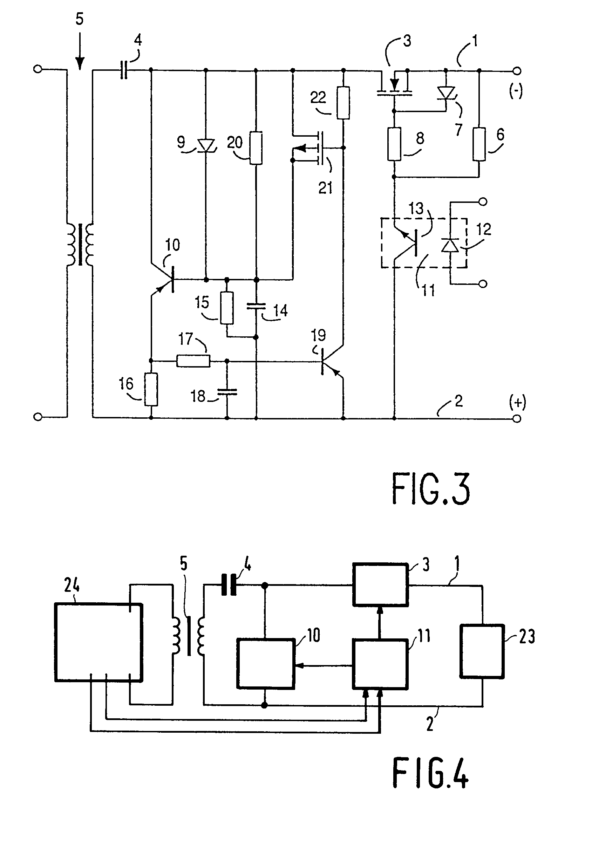

In Fig. 3 ist ein weiteres Ausführungsbeispiel einer Übertragungsvorrichtung gezeigt. Dieses Ausführungsbeispiel der Fig. 3 unterscheidet sich vom Ausführungsbeispiel der Fig. 2 durch Hinzufügung eines zusätzlichen zweiten Schalttransistors 21, der als P-Kanal-MOS-Feldeffekttransistor ausgebildet ist, und eines zusätzlichen Widerstandes 22. Der Kollektor des ersten Schalttransistors 19 ist bei diesem Ausführungsbeispiel mit dem Gate-Anschluß des Transistors 21 und ein gemeinsamer Anschluß des Speicherkondensators 14 und des Widerstandes 15 mit der Anschlußleitung 2 gekoppelt. Der Source-Anschluß des Transistors 21 ist an den gemeinsamen Knoten der Widerstände 15 und 20, der Basis des Transistors 10, der Kathode der Zenerdiode 9 und an einen Anschluß des Speicherkondensators 14 gelegt. Der Drain-Anschluß des zweiten Schalttransistors 21 ist an die Anschlußleitung 1 angeschlossen. Zwischen dem Gate-Anschluß des zweiten Schalttransistors 21 und der Anschlußleitung 1 ist noch der Widerstand 22 eingefügt. Bei der Übertragungsvorrichtung nach der Fig. 1 wird die Einschwingzeit auf den stationären Wert durch den Widerstand 15 und dem Speicherkondensator 14 bestimmt. Durch die Hinzufügung des zweiten Schalttransistors 21 wird die Einschwingzeit gegenüber der Übertragungsvorrichtung nach der Fig. 1 oder 2 verkürzt. Der Speicherkondensator 14 wird hierbei über den Transistor 21 zusätzlich aufgeladen.

Fig. 4 zeigt noch ein Übertragungssystem mit einer Übertragungsvorrichtung, die über die zwei Anschlußleitungen 1 und 2 mit einer Vermittlungsstelle 23 gekoppelt ist. Weiter ist der Primäranschluß des Transformators 5 mit einem Endgerät 24 gekoppelt, der auch die Wählimpulse zur Steuervorrichtung 11 leitet. Die in dieser Fig. 4 benutzten Bezeichnungen stimmen mit denen der anderen Fig. überein.

## Patentansprüche

1. Übertragungsvorrichtung mit einer Steuervorrichtung (11), die wenigstens zur Zuführung von Wählimpulsen und zur Steuerung von wenigstens einer ersten und zweiten zwischen einer ersten und zweiten Anschlußleitung (1, 2) angeordneten Schaltvorrichtung (3, 10) vorgesehen ist, und mit einem mit den Schaltvorrichtungen (3, 10) gekoppelten Entkoppelkondensator (4),
dadurch gekennzeichnet,
daß die erste Schaltvorrichtung (3) einerseits mit der ersten Anschlußleitung (1) und andererseits mit der zweiten Schaltvorrichtung (10) und dem Entkoppelkondensator (4) gekoppelt ist und
daß ein nicht mit der ersten Schaltvorrichtung (3) gekoppelter Anschluß der zweiten Schaltvorrichtung (10) mit der zweiten Anschlußleitung (2) gekoppelt ist.

2. Übertragungsvorrichtung nach Anspruch 1,
dadurch gekennzeichnet,
daß die beiden Schaltvorrichtungen als Transistoren (3, 10) ausgebildet sind und daß der Steueranschluß der ersten Schaltvorrichtung (3) mit einem Ausgang der Steuervorrichtung (11) und der Steueranschluß der zweiten Schaltvorrichtung (10) mit dem Koppelpunkt zwischen erster Schaltvorrichtung (3) und Entkoppelkondensator (4) gekoppelt ist.

3. Übertragungsvorrichtung nach Anspruch 1,
dadurch gekennzeichnet,
daß die beiden Schaltvorrichtungen als Transistoren (3, 10) ausgebildet sind, deren jeweiliger Steueranschluß mit einem Ausgang der Steuervorrichtung (11) gekoppelt ist, und daS der Transistor (10) der zweiten Schaltvorrichtung ein Bipolartransistor ist, dessen Kollektor mit dem gemeinsamen Anschluß von Entkoppelkondensator (4) und erster Schaltvorrichtung (3), dessen Emitter mit der zweiten Anschlußleitung (2) und dessen als Steueranschluß dienende Basis mit der Steuervorrichtung (11) gekoppelt ist.

4. Übertragungsvorrichtung nach Anspruch 2,
dadurch gekennzeichnet,
daß der Transistor (10) der zweiten Schaltvorrichtung ein Bipolartransistor ist, dessen Kollektor und dessen als Steueranschluß dienende Basis mit dem gemeinsamen Anschluß von Entkoppelkondensator (4) und erster Schaltvorrichtung (3) und dessen Emitter mit der zweiten Anschlußleitung (2) gekoppelt ist.

5. Übertragungsvorrichtung nach einem der Ansprüche
2 bis 4, dadurch gekennzeichnet,
daß der Transistor der ersten Schaltvorrichtung als MOS-Feldeffekttransistor (3) ausgebildet ist, dessen Source-Anschluß mit der ersten Anschlußleitung (1), dessen Drain-Anschluß mit dem Entkoppelkondensator (4) und dessen als Steueranschluß dienender Gate-Anschluß mit der Steuervorrichtung (11) gekoppelt ist.

6. Übertragungsvorrichtung nach einem der Ansprüche
2 bis 5, dadurch gekennzeichnet,
daß mit der Basis des Bipolartransistors (10) der zweiten Schaltvorrichtung ein Speicherkondensator (14) gekoppelt ist.

7. Übertragüngsvorrichtung nach Anspruch 6,
dadurch gekennzeichnet,
daß der Emitter des Bipolartransistors (10) der zweiten Schaltvorrichtung mit der Basis eines als Bipolartransistors (19) ausgebildeten ersten Schalttransistors gekoppelt ist, dessen Kollektor mit dem Speicherkondensator (14) und dessen Emitter mit der zweiten Anschlußleitung (2) gekoppelt ist.

8. Übertragungsvorrichtung nach Anspruch 6,
dadurch gekennzeichnet,
daß der Emitter des Bipolartransistors (10) der zweiten Schaltvorrichtung mit der Basis eines als Bipolartransistors ausgebildeten ersten Schalttransistors (19) gekoppelt ist, dessen Emitter mit der zweiten Anschlußleitung (2) und dessen Kollektor mit einem Gate-Anschluß eines als MOS-Feldeffekttransistors (21) ausgebildeten zweiten Schalttransistors gekoppelt ist, und
daß der Drain-Anschluß des zweiten Schalttransistors (21) mit der ersten Anschlußleitung (1) und der Source-Anschluß des zweiten Schalttransistors (21) mit der Basis des Bipolartransistors (19) des ersten Schalttransistors gekoppelt ist.

9. Übertragungsvorrichtung nach Anspruch 7 oder 8,
dadurch gekennzeichnet,
daß zwischen Basis und Emitter des als Bipolartransistors (19) ausgebildeten ersten Schalttransistors ein Kondensator (18) eingefügt ist.

10. Übertragungssystem mit einer Übertragungsvorrichtung zur Übertragung von Signalen zwischen einer Vermittlungsstelle und einem Endgerät
mit einer Steuervorrichtung (11), die wenigstens zur Zuführung von Wählimpulsen und zur Steuerung von wenigstens einer ersten und zweiten zwischen einer ersten und zweiten Anschlußleitung (1, 2) angeordneten Schaltvorrichtungen (3, 10) vorgesehen ist, und mit einem mit den Schaltvorrichtungen (3, 10) gekoppelten Entkoppelkondensator (4),
dadurch gekennzeichnet,
daß die erste Schaltvorrichtung (3) einerseits mit der ersten Anschlußleitung (1) und andererseits mit der zweiten Schaltvorrichtung (10) und dem Entkoppelkondensator (4) gekoppelt ist und
daß ein nicht mit der ersten Schaltvorrichtung (3) gekoppelter Anschluß der zweiten Schaltvorrichtung (10) mit der zweiten Anschlußleitung (2) gekoppelt ist.
